# EUROPÄISCHE PATENTSCHRIFT

(11) **EP 0 545 241 B1**
(45) Veröffentlichungstag und Bekanntmachung des Hinweises auf die Patenterteilung: **28.02.1996**
(21) Anmeldenummer: 92120044.0
(22) Anmeldetag: 25.11.1992
(51) Int. Cl.: C10J 3/66, C10J 3/46

(54) **Verfahren zur thermischen Verwertung von Abfallstoffen**
Process for thermic valorisation of waste materials
Procédé pour la valorisation thermique de déchets

(30) Priorität: 29.11.1991 DE 4139512; 19.06.1992 DE 4220055
(43) Veröffentlichungstag der Anmeldung: 09.06.1993
(73) Patentinhaber: Noell Energie- und Entsorgungstechnik GmbH, D-09599 Freiberg (DE)
(72) Erfinder: Schingnitz, Manfred, O-9200 Freiberg (DE); Göhler, Peter, O-9200 Freiberg (DE); Martin, Heinz, O-2500 Rostock (DE)
(74) Vertreter: Lüdtke, Frank

(56) Entgegenhaltungen:
- EP-A- 0 120 397
- WO-A-90/02162
- DE-A- 3 011 157
- GB-A- 2 109 400
- US-A- 4 142 867
- US-A- 4 497 637

## Beschreibung

Die Erfindung betrifft ein Verfahren zur thermischen Verwertung von brennbaren bzw. organische Bestandteile aufweisenden Abfallstoffen unterschiedlicher Beschaffenheit und Herkunft, unabhängig vom Grad ihrer Belastung mit Schwermetallen und toxischen organischen bzw. chlororganischen Verbindungen unter Erzeugung eines sauberen, vielseitig stoffwirtschaftlich und energetisch einsetzbaren Gases und eluationsfester rein mineralischer Rückstände. Insbesondere ist das Verfahren zur umweltgerechten Verwertung von Abfallstoffen wie Hausmüll, kunststoffhaltige Industrieabfälle, Farbrückstände, Shredder-Leichtgut der Altauto-Aufbereitung oder mit Ölen kontaminierte Abfälle geeignet.
Es ist bekannt, brennbare Bestandteile enthaltende Abfallstoffe, wie zum Beispiel Müll, zu verbrennen, um den Energieinhalt zur Erzeugung von Elektroenergie und als Heizwärme zu nutzen, toxische organische Bestandteile zu zerstören und das zu deponierende Volumen drastisch zu reduzieren.

Verbrennungsanlagen für solche Abfälle erfordern eine sehr aufwendige Rauchgasreinigung, zumal die Gefahr besteht, daß sich während der Verbrennung oder in der Abkühlungsphase der primären Verbrennungsgase aus Chlorverbindungen im Einsatzmaterial hochtoxische chlororganische Substanzen, wie Dioxine und Furane, bilden. Die bei der Verbrennung entstehenden festen Rückstände (Aschen) und Flugstäube sind voluminös, empfindlich gegenüber Eluation von Schwermetallen durch atmosphärische Wässer und schwer zu deponieren. Deshalb wurde ein nachträgliches Aufschmelzen der Asche zur Überführung in eine glasartige eluationsfeste Schlacke vorgeschlagen, das naturgemäß ebenfalls mit hohen Kosten verbunden ist.
Bekannt ist weiter, Abfallstoffe und Rückstände einer Vergasung zu unterziehen. Eine für diese Zwecke anwendbare Technik der Vergasung ist die partielle Oxydation mit Sauerstoff im Flugstrom. Hierbei wird der Brennstoff, Rückstand oder Abfallstoff mit dem Sauerstoff in Form einer Flammenreaktion, vielfach auch unter erhöhtem Druck, in ein kohlenmonoxid- und wasserstoffreiches Gas umgewandelt. Der Prozeß läuft unter solchen Temperaturen ab, daß die mineralischen Bestandteile bereits primär eine schmelzflüssige Schlacke bilden, die bei der Abkühlung und bei Kontakt mit einem Wasserbad zu einem glasartigen Schlackengranulat erstarrt. Im eluationsfesten Schlackengranulat ist ein beachtlicher Anteil des Schwermetallinhaltes der eingesetzten Abfallstoffe eingebunden. Unter den Bedingungen der Vergasung werden primär im Einsatzgut enthaltene chlororganische Verbindungen vollständig umgesetzt, wobei der Chlorinhalt zu Chlorwasserstoff bzw. zu nichttoxischen anorganischen Chloriden umgewandelt wird. Eine de-novo-Synthese ist unter diesen Bedingungen ausgeschlossen. Damit ist das erzeugte Gas auch frei von Dioxinen und Furanen. Das erzeugte Gas kann nach mechanischer Reinigung und Abkühlung des praktisch vollständig zu Schwefelwasserstoff umgesetzten Schwefelinhaltes für energetische Zwecke, zum Betreiben von Gasturbinen und Gasmotoren sowie auch als Synthesegas eingesetzt werden.

Als Nachteil der Vergasung im Flugstrom erweist es sich, daß das Einsatzgut für den Vergasungsprozeß in einer fließfähigen Form vorliegen muß, um eine kontinuierliche und gut regelbare Einspeisung in den Vergasungsreaktor zu erreichen. Als fließfähige Materialien sind gasförmige und flüssige Stoffe, pumpfähige Suspensionen von feinzerkleinerten Feststoffen in Flüssigkeiten, aber auch in einem Trägergas suspendierte staubförmige feste Stoffe zu verstehen. Vielfach liegen die zu entsorgenden Abfallstoffe jedoch in einer solchen Konsistenz und Stückgröße vor, daß die Überführung in eine fließfähige Form durch mechanische Aufbereitungsverfahren, insbesondere durch Aufmahlung, technisch nicht möglich oder nicht wirtschaftlich zu erreichen ist.

Es ist vorgeschlagen und untersucht worden, Abfallstoffe unterschiedlichster Art einer Pyrolyse, also einer thermischen Umwandlung bei Temperaturen von 500-700 °C zu unterwerfen. Für die Pyrolyse werden meist Drehrohröfen mit Außenbeheizung vorgesehen, deren Vorteil es ist, daß sie sowohl stückige als auch feinkörnige und fließfähige Einsatzstoffe aufnehmen können. Bei der Pyrolyse entstehen ein kohlenstoffhaltiger Rückstand, ein kohlenwasserstoffhaltiges Schwachgas sowie auskondensierbare Teeröle. Es hat sich gezeigt, daß die Teeröle nicht oder nur mit sehr hohem Aufwand zu Kraftstoffen, Heizöl oder stofflich nutzbaren Produkten aufgearbeitet werden können. Für das Schwachgas selbst oder das bei seiner Verbrennung entstehende Rauchgas sind umfangreiche Reinigungseinrichtungen erforderlich, die den Einrichtungen für die Rauchgasreinigung von Müllverbrennungsanlagen nahekommen. Die festen Rückstände, vor allem die kohlenstoffreichen feinen Fraktionen, sind nicht zuletzt wegen ihrer Entzündbarkeit schwierig zu deponieren.

Mit EP-A-0 302 310 ist ein Verfahren und eine Anlage zur thermischen Abfallentsorgung vorgeschlagen worden, bei denen eine Pyrolyse von Abfallstoffen mit einer nachfolgenden Verbrennung von Schwelgas mit nicht flüchtigen Pyrolyserückständen kombiniert ist. Dabei ist vorgesehen, aus den festen Rückständen der Pyrolyse zunächst grobe, anorganische Bestandteile wie Metallstücke, Glas, Steine, durch eine Separationsstufe auszuhalten und den verbleibenden kohlestoffhaltigen Anteil zusammen mit dem kohlenwasserstoffhaltigen Schwelgas unter Luftüberschuß bei solchen Temperaturen zu verbrennen, daß die mineralischen Bestandteile zum Schmelzfluß kommen, der nach Abkühlung in verglaster Form vorliegt. Mit diesem Vorschlag sollen die oben dargelegten Probleme bei der Unterbringung der Pyrolyseprodukte beherrscht und die mineralischen Anteile in verglaster Form gewonnen werden.

Erfahrungen aus der Verbrennungstechnik zeigen, daß im Einsatzgut enthaltene, beziehungsweise während der Verbrennung neu gebildete Stoffe und leicht flüchtige Schwermetalle ausdampfen, an den nachgeschalteten Heizflächen sublimieren und zusammen mit im Rauchgas suspendierten Schlacketröpfchen und unvollständig ausgebrannten Kokspartikeln Ansätze bilden können und Betriebsstörungen verursachen können, deren laufende Beseitigung ebenfalls mit hohen Investitionen und Betriebskosten, gegebenenfalls mit Leistungseinschränkungen, verbunden ist.

Im übrigen verbleibt wie bei einer Abfallverbrennungsanlage die Notwendigkeit einer sehr umfangreichen Rauchgasreinigung, um die Emission von Schwefeldioxyd, Chlorwasserstoff, Stickoxyden und flüchtigen Schwermetallen zu begrenzen.

Ausgehend von diesem Stand der Technik, besteht die Aufgabe der Erfindung darin, ein umweltfreundliches Verfahren zur thermischen Verwertung von Abfallstoffen zu schaffen, mit dem die Nachteile einer Müllverbrennung, insbesondere die Notwendigkeit einer nachgeschalteten, umfangreichen Rauchgasreinigung und die Gefahr der Entstehung von toxischen Substanzen wie Dioxinen vermieden werden.

Diese Aufgabe wird durch die im ersten Patentanspruch genannten Merkmale gelöst. Vorteilhafte Ausführungen sind in den Unteransprüchen genannt.
Der Vorteil der Erfindung besteht darin, daß stückige, feinkörnige, pastöse und flüssige Abfallstoffe verschiedener Herkunft, die zumindest Anteile von brennbaren bzw. organischen Materialien enthalten und einer direkten Wiederverwendung nicht zugeführt werden können, unabhängig vom Grad ihrer Belastung mit Schadstoffen, wie Schwermetallen oder toxischen organischen und chlororganischen Verbindungen, unter
Erzeugung eines sauberen, vielseitig stoffwirtschaftlich und energetisch einsetzbaren Gases und eluationsfester, verwertbarer und einfach zu deponierender, rein mineralischer, fester Rückstände verwertet werden, ohne daß eine toxische Belastung durch beispielsweise polychlorierte Dibenzodioxine und -furane auftritt. Durch die Kombination der an sich bekannten Verfahrensstufen wie Pyrolyse, Zerkleinerung, Klassierung, Vergasung und Gasreinigung können Abfallstoffe, wie Hausmüll, kunststoffhaltige Industrieabfälle, Farbrückstände, Altreifen, Shredder-Leichtgut der Autoverwertung oder mit Ölen kontaminierte Abfälle, ohne aufwendige Vorbehandlung verarbeitet werden. Dazu werden die Abfallstoffe in einem Pyrolyseofen unter Luftabschluß bei Temperaturen bis zu etwa 800 °C einem Schwelprozeß unterworfen , in welchem ein dampfförmige Kohlenwasserstoffe enthaltendes Pyrolysegas und ein fester Pyrolyserückstand erzeugt werden.

Als Pyrolyseofen, in dem der Schwelprozeß stattfindet, kann ein von außen beheizter Drehrohrofen dienen.
Das Pyrolysegas wird bei Temperaturen oberhalb der Kondensationstemperatur der dampfförmig mitgeführten Kohlenwasserstoffe von den festen Pyrolyserückständen getrennt. Der feste Pyrolyserückstand wird einem aus Zerkleinerungs- und Klassierstufen bestehenden Separationsprozeß unterworfen, in dem ein mit koksartigen Bestandteilen angereichertes Feingut und ein von organischen Verunreinigungen freies, im wesentlichen aus metallischen Bestandteilen bestehendes Grobgut gewonnen wird.

Das gereinigte Pyrolyserohgas, das genannte Feingut und wahlweise ein zusätzlicher fluider Brennstoff werden einem Vergasungsreaktor zugeführt, in welchem diese mit einem freien Sauerstoff enthaltenden Vergasungsmittel autotherm zu einem CO- und H₂-haltigen Gas und einem mineralischen Rückstand umgesetzt werden, wobei das Verhältnis der Menge an freiem Sauerstoff zur Menge an im Pyrolysegas, im Feingut und gegebenenfalls im zusätzlichen fluiden Brennstoff enthaltenen Kohlenstoff so bemessen wird, daß die sich im Vergasungsreaktor einstellenden Temperaturen oberhalb der Schmelztemperatur des mineralischen Rückstandes liegen und eine schmelzflüssige Schlacke entsteht.
Die schmelzflüssige Schlacke wird gekühlt, im Kontakt mit Wasser granuliert und aus dem Vergasungsreaktor ausgetragen.
Das CO- und H₂-reiche Gas wird gekühlt und von Schwefelverbindungen, Halogenwasserstoffen und Aerosolen befreit.
Der Umsatz des freien Sauerstoff enthaltenden Vergasungsmittels im Flugstrom erfolgt in Form einer Flammenreaktion.

Das Feingut, welches im Separationsprozeß, beispielsweise in Form einer Siebklassierung, gewonnen wird, wird bis zu einer Körnung von kleiner als 1 mm, vorzugsweise kleiner als 0,5 mm aufgemahlen.
Das Mahlen kann in einer Kugelmühle erfolgen. Das aufgemahlene Feingut wird, in einem Trägergas suspendiert, dem Vergasungsreaktor zugeführt.
Als Träger kann ein als zusätzlicher Brennstoff dienendes brennbares Gas herangezogen werden.

Eine weitere Möglichkeit ist die, daß das Feingut in einer Trägerflüssigkeit suspendiert dem Vergasungsreaktor zugeführt wird.
Die Trägerflüssigkeit kann eine brennbare Flüssigkeit sein, die als zusätzlicher Brennstoff dienen kann.
Auf diese Weise können Schwankungen im Brennstoffgehalt der Abfallstoffe ausgeglichen werden.
Als vorteilhaft hat es sich weiterhin erwiesen, das Pyrolysegas nach Trennung von den festen Pyrolyserückständen zu kühlen, so daß mindestens ein Teil der dampfförmig mitgeführten Kohlenwasserstoffe kondensiert und vom Pyrolysegas getrennt werden kann.

Ein Teil der aus dem Pyrolysegas kondensierten Kohlenwasserstoffe kann als zusätzlicher fluider Brennstoff dem Vergasungsreaktor zugeführt werden.
Als zusätzlicher fluider Brennstoff können brennbare Abfallstoffe der Gruppe in einem Trägergas suspendierter, pulverisierter fester Abfallstoffe, in einer Trägergasflüssigkeit suspendierter pulverisierter fester Abfallstoffe und kontaminierter brennbarer Gase dem Vergasungsreaktor zugeführt werden.

Ein Teilstrom des von Schwefelverbindungen, Halogenwasserstoffen und Aerosolen befreiten CO- und H₂-reichen Gases kann genutzt werden, um den Pyrolyseofen von außen zu beheizen.

Die Erfindung soll an Hand von schematischen Darstellungen des Verfahrensablaufes am Beispiel der Verwertung von Hausmüll erläutert werden.
Die Figuren zeigen:

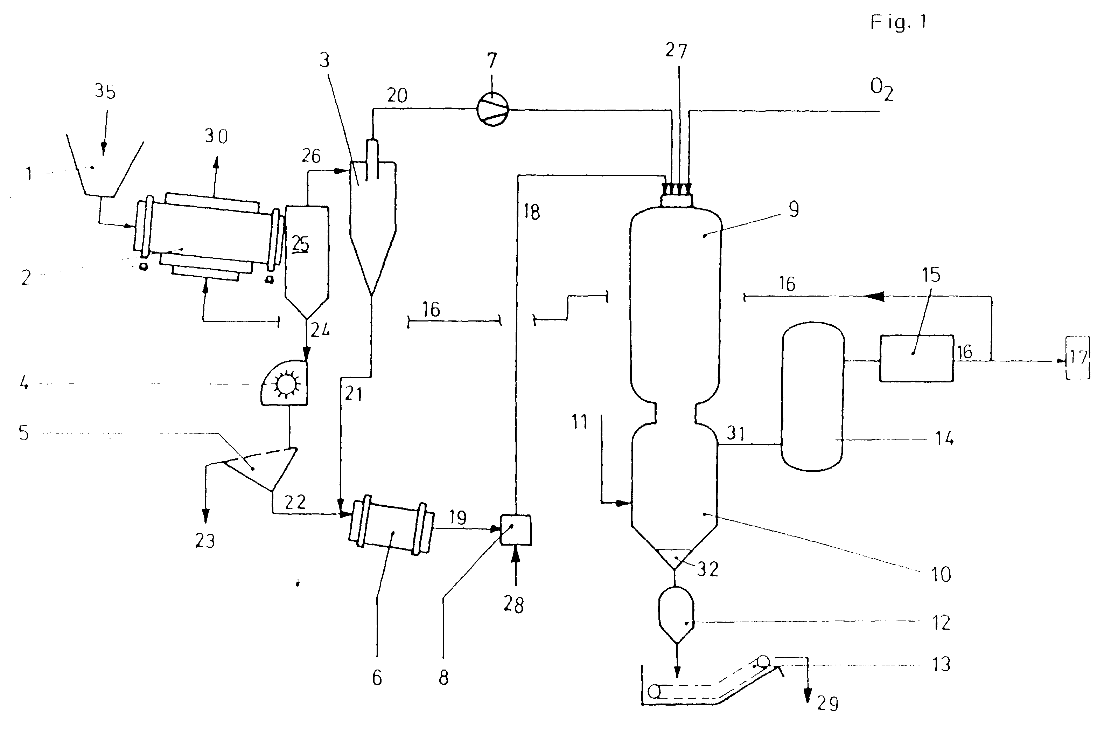

- Fig. 1: schematische Darstellung des Verfahrensablaufes der Verwertung von Hausmüll,
- Fig. 2: schematische Darstellung des Verfahrensablaufes der Verwertung von Hausmüll mit der Zuführung von zusätzlichen fluiden Abfallstoffen in den Gasreaktor.

Der angelieferte Müll 35 wird nach einer im Schema nicht dargestellten Vorzerkleinerung über einen Bunker 1 einem pyrolyseofen in Form eines Drehrohrofens 2 mit Gasbeheizung von außen mit in der Anlage hergestellten Reingas 16 zugeführt und einem Schwelprozeß mit einer Endtemperatur von etwa 650 °C unterworfen.

Mit technisch üblichen Ein- und Austragsschleusvorrichtungen wird erreicht, daß dieser Schwelprozeß praktisch unter Luftabschluß verläuft. Unter diesen Bedingungen werden die organischen Inhaltsstoffe des Mülles unter Abspaltung eines mit dampfförmigen Kohlenwasserstoffen beladenen Pyrolyserohgases 26 zu einem koksartigen Pyrolyserückstand 24 umgewandelt, der zusammen mit weitgehend unveränderten anorganischen Bestandteilen des Mülls über ein übliches Ausfallgehäuse 25 mit gasdichter Austragsschleuse aus dem Drehrohr 2 ausgetragen und einem Brecher 4 zuführt wird. Das Pyrolyserohgas 26 verläßt das Ausfallgehäuse 25 nach oben und wird ohne wesentliche Abkühlung im Staubabscheider 3 von mitgeführten Feststoffpartikeln befreit.
Der Austrag aus dem Brecher 4, passiert das mit einem Siebgewebe von ca. 15 mm Maschenweite belegte Sieb 5, mit dessen Hilfe ein mit koksartigen Bestandteilen angereichertes Feingut 22 und ein von organischen Verunreinigungen freies, im wesentlichen aus metallischen Bestandteilen bestehendes Grobgut 23 gewonnen wird. Das Feingut 22 wird gemeinsam mit dem Staub 21 aus dem Pyrolysegas 26 vom Staubabscheider 3 in einer Rohrmühle 6 auf eine Korngröße kleiner als etwa 0,5 mm gemahlen.

Das aufgemahlene Feingut 19 wird mit Hilfe des pneumatischen Förderers 8 als Fluidstrom 18 mit Stickstoff als Trägergas 28 einem nach dem Flugstromprinzip arbeitendenVergasungsreaktor 9 zugeführt. In dem Vergasungsreaktor 9 wird weiter mit Hilfe eines Heißgaskompressors 7 das von Kohlenwasserstoffen gereinigte Pyrolyserohgas 20 eingebracht, das während der Kompression und des Transportes auf einer Temperatur gehalten wird, bei der eine Kondensation von Kohlenwasserstoffen und Wasserdampf vermieden wird. Es hat sich gezeigt, daß dazu eine Temperatur von minimal 300 °C ausreicht.

Der Vergasungsreaktor 9 besteht aus einem äußeren Druckgefäß, in dem ein für Hochtemperaturbetrieb ausgelegter zylindrischer Reaktionsraum untergebracht ist, der nach unten mit einem Quenchraum 10 verbunden ist. Bei der Gestaltung des Reaktionsraumes hat sich die Ausführung als gasdicht verschweißte Rohrwandkonstruktion bewährt, die mit Druckwasser gekühlt wird und reaktionsraumseitig mit einer feuerfesten Stampfmasse belegt ist. Der aufgemahlene Pyrolysekoks im Fluidstrom 18, das Pyrolyserohgas 20, technischer Sauerstoff O₂ als Vergasungsmittel und Erdgas als Zusatzbrennstoff 27 für die Aufrechterhaltung einer Stützflamme werden über einen Brenner am Kopf des Reaktors 9 in den Reaktionsraum eingeführt. Der Umsatz zu einem CO- und H₂-haltigen Gas verläuft in Form einer Flammenreaktion, wobei das Verhältnis von Sauerstoff O₂ zu den im Pyrolyserohgas 20, im Pyrolysekoks 19 und im Zusatzbrennstoff enthaltenen Kohlenwasserstoffen bzw. Kohlenstoff so bemessen wird, daß sich die am Ende des Reaktionsraumes einstellende Temperatur oberhalb der Schmelztemperatur der mineralischen Rückstände liegt und eine schmelzflüssige Schlacke entsteht.

In der Regel genügt eine Temperatur von etwa 1400 °C. Dazu ist eine Sauerstoffmenge O₂ erforderlich, die etwa 45 % der für "stöchiometrische Verbrennung" der in den Reaktionsraum eingeführten brennbaren Bestandteile notwendigen Sauerstoffmenge ausmacht.

Das im Reaktionsraum erzeugte Gas besteht im wesentlichen aus CO und H₂ als Nutzkomponenten, weiter aus CO₂ und Wasserdampf. NH₃, H₂S und HCL sind Spurenkomponenten. Das Gas ist frei von Kohlenwasserstoffen und chlororganischen Verbindungen wie Dioxinen. Es tritt gemeinsam mit der schmelzflüssigen Schlacke in den Quenchraum 10 ein, wo es mit dem über Leitung 11 zugeführten Quenchwasser in Kontakt gebracht wird. Dabei wird das Gas bis zur Sättigungstemperatur gekühlt und gleichzeitig mit Wasserdampf gesättigt sowie von Reststaub, HCL und NH₃ befreit. Die schmelzflüssige Schlacke erstarrt und sammelt sich im Sumpf 32 des Quenchraumes 10. Sie zerfällt durch den Kontakt mit Wasser zu einem Granulat 29 mit glasartiger Struktur, das über die Schlackenschleuse 12 und den Schlackenaustrag 13, bestehend aus einer wassergefüllten Auffangwanne mit einem Kratzerband, ausgetragen wird.

Das gesättigte Vergasungsgas 31 wird unter Gewinnung von Abwärme in einem Gaskühler 14 gekühlt und in der Gasreinigung 15 mit üblichen Verfahren von H₂S und NH₃ befreit. Die H₂S-Fraktion wird schließlich zu verkaufsfähigem Schwefel aufgearbeitet.

Das verbleibende Reingas 16 wird, soweit es nicht zur Unterfeuerung des Drehrohres 2 genutzt wird, zum Betrieb eines Gasmotors verwendet 17. Das bei der Unterfeuerung des Drehrohrofens 2 entstehende Rauchgas 30 wird abgeleitet.

Das bei der Kühlung anfallende Kondensat wird als Quenchwasser 11 in den Quenchraum 10 zurückgeführt. Doch wird der im Quenchraum 10 unverdampft bleibende Rest des Wassers aus dem Kreislauf ausgeschleust. Es enthält die als Chlorid-Ionen vorliegende Chlorfracht des Einsatzgutes, ist aber frei von organischen Verunreinigungen. Seine Aufarbeitung erfolgt nach bekannten Verfahren (Eindampfung).

Bei einem Durchsatz von 20 t/h Hausmüll 35 mit einer Zusammensetzung von etwa

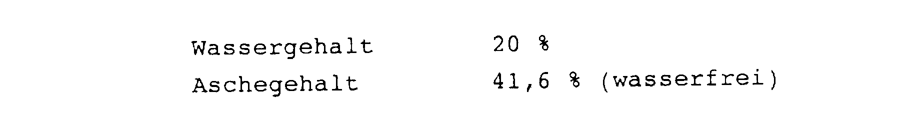

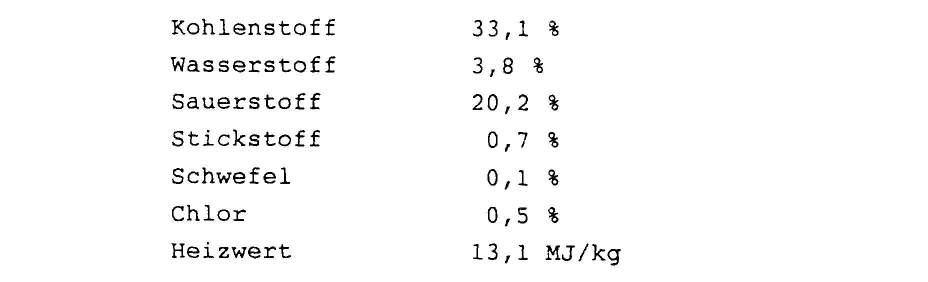

entstehen 5200 m³ _{N}/h trockenes Pyrolysegas 26 mit einem Gehalt an kondensierten Kohlenwasserstoffen von etwa 180 g/m³ und einem Heizwert (einschließlich Kohlenwasserstoffdämpfen) von 18,0 MJ/m³_{N} und 6000 m³_{N}/h Wasserdampf.

Außerdem fallen 9500 kg/h feste Rückstände 24 an, die sich zu 2800 kg/h auf die grobe Fraktion 23, zu 7300 kg/h auf die kohlenstoffreiche Feinfraktion verteilen. Während die eluationsfeste, praktisch ausschließlich aus mineralischen und metallischen Bestandteilen bestehende grobe Fraktion 23 zur weiteren Aufbereitung und Verwendung bzw. Deponie abgegeben wird, wird das gemahlene Feingut 19 mit einem Aschegehalt von etwa 53 % wie auch das mit Wasserdampf und Kohlenwasserstoffdämpfen beladene Pyrolysegas 26 nach dem Abscheidevorgang im Abscheider 3 dem Vergasungsreaktor 9 zugeführt.

Die Vergasung erfolgt bei einem Druck von 2 bar durch Umsatz mit 5850 m³_{N}/h technischem Sauerstoff. Dabei ist berücksichtigt, daß 600 m³_{N}/h Erdgas als Zusatzbrennstoff 27 eingesetzt werden.
Es entstehen 19 600 m³_{N}/h Vergasungsgas 31 mit einer Zusammensetzung von

| | |
|---|---|
| 37 % | H₂ |
| 39 % | CO |
| 20 % | CO₂ |
| 4 % | N₂ |

und einem Heizwert von 8,9 MJ/m³_{N}. Das Gas enthält 4 g/m³_{N} Chlor in Form von Chlorwasserstoff und dampfförmigen chloridischen Salzen (NaCl, KCl), die im Quenchraum 10 vom Waschwasser aufgenommen werden und nach Eindampfung des Prozeßabwassers etwa 150 kg/h fester Salze ergeben. Außerdem enthält das Gas ca. 0,8 g/m³_{N} Schwefelwasserstoff, der in der Gasreinigungsanlage abgetrennt und zu ca. 15 kg/h Elementarschwefel oxidiert wird. Etwa 25 % des Reingases 16 werden zur Beheizung des Drehrohrofens 8 zurückgeführt.

Im gereinigten Gas werden ca. 5 mg/m³_{N}Schwefel gefunden. Das entspricht nach Verbrennung bzw. Einsatz des Reingases 16 im Gasmotor 17 einem SO₂-Gehalt in den Abgasen von ca. 2,5 mg SO₂/m³_{N} und erfüllt alle Anforderungen des Umweltschutzes.

Es fallen 3600 kg/h aus dem Schmelzfluß erstarrtes glasartiges Granulat 29 an, das nach durchgeführten Eluationstests unbedenklich deponiert werden kann.

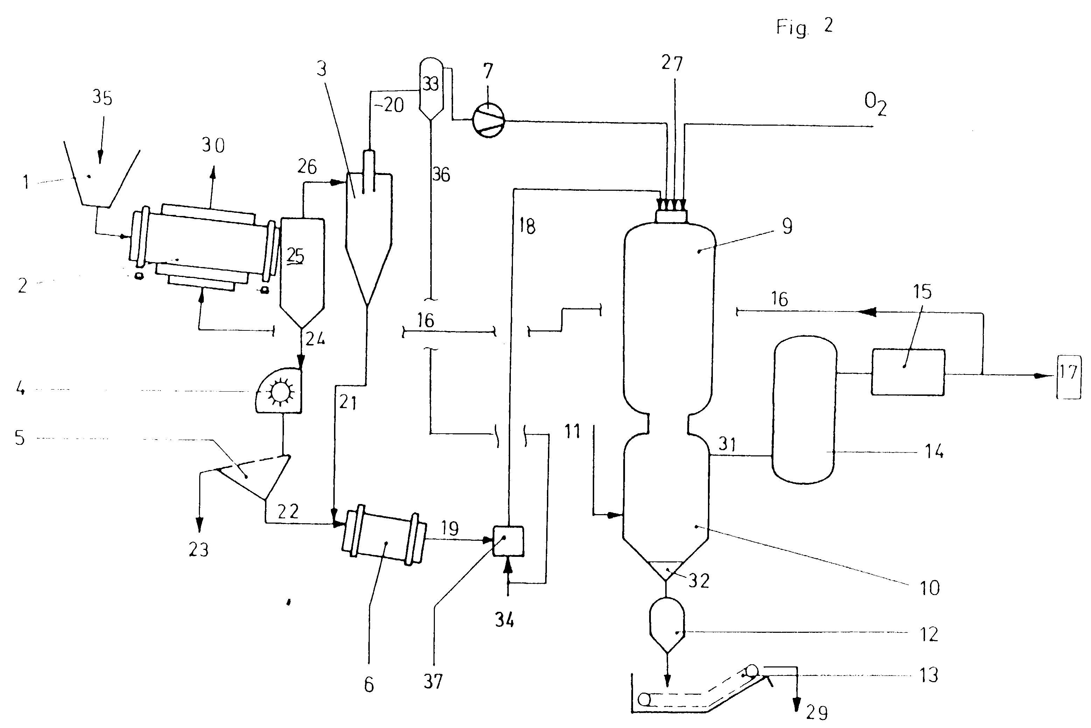

Bei einem zweiten Ausführungsbeispiel (Fig. 2) sind als Abfallstoffe 35 neben ca. 10 t/h mit Kunststoffabfällen angereichertem Müll zusätzlich 3 t/h mit Schwermetallen und Chlor belastete Altöle zu verarbeiten, wobei der Vergasungsreaktor 9 mit einem Druck von 6 bar betrieben wird.

Die Ausführungsform des Verfahrens unterscheidet sich von der im ersten Beispiel dargestellten Variante dadurch, daß das heiße, aus dem Staubabscheider 3 austretende Rohgas 20 auf etwa 90 °C abgekühlt wird, bevor es vom Heißgaskompressor 7 angesaugt wird. Die Abkühlung kann in einem zusätzlich eingebauten Gaskühler 33 erfolgen. Dabei kondensieren etwa 900 kg/h Teere und Öle 36 aus, die dem Altöl 34 zugesetzt werden. Dagegen wird bei der Kühlung der Wasserdampftaupunkt von ca. 80 °C nicht unterschritten.

Der Förderer 8, der im ersten Beispiel als pneumatisches Dichtstromfördersystem ausgebildet ist und mit einem Trägergas 28 arbeitet, ist durch ein hydraulisches Fördersystem 37 ersetzt. Dabei wird der aufgemahlene Feinkornanteil des Pyrolysekokses 19 mit dem Altöl und den Teeren und Ölen aus der Pyrolyse vermischt und über eine Pumpe dem Brenner des Vergasungsreaktors 9 zugeführt. Der eingespeiste Kohlenstaub-Öl-Schlamm hat einen Feststoffgehalt von ca. 50 %.

Bei einem Einsatz von 5700 m³_{N}/h technischem Sauerstoff O₂ entstehen 18 500 m³_{N}/h Gas 31 etwa der gleichen Zusammensetzung wie im ersten Beispiel.

Es wurde gefunden, daß auch die mit dem Altöl eingebrachten Chlormengen quantitativ zu Chlorwasserstoff bzw. chloridischen Salzen umgewandelt und mit dem Pyrolyseabwasser ausgebracht werden. Der Einsatz von Altöl hat keinen erkennbaren Einfluß auf die Beschaffenheit des glasartigen Schlackengranulats 29. Es wurde weiter gefunden, daß unter diesen Bedingungen das Altöl praktisch ohne Bildung von Ruß vergast wird, und das Abwasser frei von organischen Verunreinigungen bleibt.

## Patentansprüche

1. Verfahren zur thermischen Verwertung von Abfallstoffen durch Kombination an sich bekannter Verfahrensstufen wie Pyrolyse, Zerkleinerung, Klassierung, Vergasung und Gasreinigung, bei dem die Abfallstoffe (35) in einem Pyrolyseofen (2) unter Luftabschluß bei Temperaturen bis zu etwa 800 °C einem Schwelprozeß unterworfen werden, in welchem ein dampfförmige Kohlenwasserstoffe enthaltendes Pyrolysegas (26) und ein fester Pyrolyserückstand (24) erzeugt werden,
das Pyrolysegas (26) bei Temperaturen oberhalb der Kondensationstemperatur der dampfförmig mitgeführten Kohlenwasserstoffe von den festen Pyrolyserückständen (21) getrennt wird,
der feste Pyrolyserückstand (24) einem aus Zerkleinerungs- und Klassierstufen (4, 5, 6) bestehenden Separationsprozeß unterworfen wird,in dem ein mit koksartigen Bestandteilen angereichertes und aufgemahlenes Feingut (22) und ein von organischen Verunreinigungen freies, im wesentlichen aus metallischen Bestandteilen bestehendes Grobgut (23) gewonnen wird,
das von den festen Pyrolyserückständen getrennte Pyrolyserohgas (20), das genannte aufgemahlene Feingut suspendiert in einem fluiden Trägermedium und wahlweise ein zusätzlicher fluider Brennstoff (27) einem Vergasungsreaktor (9) zugeführt werden, in welchem diese im Flugstrom mit einem freien Sauerstoff enthaltenden Vergasungsmittel (O₂) unter Ausbildung einer Flamme autotherm zu einem CO- und H₂-haltigen Gas (31) und
einem mineralischen Rückstand umgesetzt werden, wobei das Verhältnis der Menge an freiem Sauerstoff zur Menge an im Pyrolysegas, im Feingut und gegebenenfalls im zusätzlichen fluiden Brennstoff enthaltenen Kohlenstoff so bemessen wird,
daß die sich im Vergasungsreaktor (9) einstellenden Temperaturen oberhalb der Schmelztemperatur des mineralischen Rückstandes liegen und eine schmelzflüssige Schlacke entsteht, die gemeinsam mit dem CO- und H₂-reichen Gas gekühlt und im Kontakt mit Wasser (11) granuliert wird, bevor das gekühlte Gas und die granulierte Schlacke aus dem Vergasungsreaktor (9) ausgetragen werden.

2. Verfahren nach Anspruch 1, dadurch gekennzeichnet, daß das gekühlte CO- und H₂-reiche Gas (31) von Schwefelverbindungen, Halogenwasserstoffen und Aerosolen befreit wird.

3. Verfahren nach einem oder mehreren der Ansprüche 1 und 2, dadurch gekennzeichnet, daß das Feingut (21, 22) bis zu einer Körnung von kleiner 1 mm, vorzugsweise kleiner als 0,5 mm aufgemahlen wird.

4. Verfahren nach einem oder mehreren der Ansprüche 1 bis 3, dadurch gekennzeichnet, daß das fluide Trägermedium, in dem das Feingut suspendiert ist und dem Vergasungsreaktor (9) zugeführt wird, ein Trägergas ist.

5. Verfahren nach einem oder mehreren der Ansprüche 1 bis 4, dadurch gekennzeichnet, daß als Trägergas (28) ein als zusätzlicher Brennstoff dienendes brennbares Gas herangezogen wird.

6. Verfahren nach einem oder mehreren der Ansprüche 1 bis 5, dadurch gekennzeichnet, daß das fluide Trägermedium, in dem das aufgemahlene Feingut suspendiert ist, eine Trägerflüssigkeit ist.

7. Verfahren nach einem oder mehreren der Ansprüche 1 bis 6, dadurch gekennzeichnet, daß als Trägerflüssigkeit (34) eine als zusätzlicher Brennstoff dienende Flüssigkeit herangezogen wird.

8. Verfahren nach einem oder mehreren der Ansprüche 1 bis 7, dadurch gekennzeichnet, daß das Pyrolysegas (20) nach Trennung von den festen Pyrolyserückständen (21) gekühlt und mindestens ein Teil der dampfförmig mitgeführten Kohlenwasserstoffe kondensiert und vom Pyrolysegas (20) getrennt wird.

9. Verfahren nach Anspruch 8, dadurch gekennzeichnet, daß mindestens ein Teil der aus dem Pyrolysegas (20) kondensierten Kohlenwasserstoffe (36) als zusätzlicher fluider Brennstoff dem Vergasungsreaktor (9) zugeführt wird.

10. Verfahren nach einem oder mehreren der Ansprüche 1 bis 9, dadurch gekennzeichnet, daß als zusätzlicher fluider Brennstoff (34) brennbare Abfallstoffe der Gruppe in einem Trägergas suspendierter, pulverisierter, fester Abfallstoffe, in einer Trägerflüssigkeit suspendierter, pulverisierter, fester Abfallstoffe, flüssiger Abfallstoffe und kontaminierter, brennbarer Gase dem Vergasungsreaktor zugeführt werden.

11. Verfahren nach einem oder mehreren der Ansprüche 1 bis 10, dadurch gekennzeichnet, daß die Abfallstoffe (35) in einem als außen beheizten Drehrohrofen gestalteten Pyrolyseofen (2) dem Schwelprozeß unterworfen werden.

12. Verfahren nach Anspruch 11, dadurch gekennzeichnet, daß die Beheizung des außen beheizten Drehrohrofens (2) mit dem von Schwefelverbindungen, Halogenwasserstoffen und Aerosolen befreiten CO- und H₂-reichen Gas (16) erfolgt.

## Claims

1. Method of thermally utilising waste materials by combining method stages which are known per se, such as pyrolysis, comminution, classification, gasification and gas-cleaning, wherein the waste materials (35) are subjected to a low-temperature carbonising process in a pyrolytic furnace (2) with the exclusion of air at temperatures up to about 800° C, in which carbonising process a pyrolytic gas (26), containing vaporous hydrocarbons, and a solid pyrolytic residue (24) are produced, wherein the pyrolytic gas (26) is separated from the solid pyrolytic residues (21) at temperatures above the condensation temperature of the hydrocarbons, which are entrained in vaporous form, wherein the solid pyrolytic residue (24) is subjected to a separation process, which comprises comminuting and classifying stages (4, 5, 6) and in which separation process a ground fine material (22), which is enriched with coke-like constituent ingredients, and a coarse material (23), which is free of organic impurities and substantially comprises metallic constituent ingredients, are obtained, and wherein the crude pyrolytic gas (20) which is separated from the solid pyrolytic residues, the above-mentioned ground fine material which is suspended in a fluid carrier medium, and selectively an additional fluid fuel (27) are supplied to a gasification reactor (9), in which these gasifying agents (O₂), contained in the flow stream with a free oxygen, are converted autothermally, with the provision of a flame, to form a CO- and H₂-containing gas (31) and a mineral residue, the ratio between the quantity of free oxygen and the quantity of carbon contained in the pyrolytic gas, in the fine material and possibly in the additional fluid fuel, is such that the temperatures being set in the gasification reactor (9) lie above the melting temperature of the mineral residue, and a molten slag is produced, which is cooled jointly with the gas, which is rich in CO and H₂, and granulated in contact with water (11) before the cooled gas and the granulated slag are discharged from the gasification reactor (9).

2. Method according to claim 1, characterised in that the cooled gas (31), which is rich in CO and H₂, is freed of sulphur compounds, hydrogen halides and aerosols.

3. Method according to one or more of claims 1 and 2, characterised in that the fine material (21, 22) is ground to a granulation of less than 1 mm, preferably less than 0.5 mm.

4. Method according to one or more of claims 1 to 3, characterised in that the fluid carrier medium, in which the fine material is suspended and supplied to the gasification reactor (9), is a carrier gas.

5. Method according to one or more of claims 1 to 4, characterised in that a combustible gas, which serves as an additional fuel, is used as carrier gas (28).

6. Method according to one or more of claims 1 to 5, characterised in that the fluid carrier medium, in which the ground fine material is suspended, is a carrier fluid.

7. Method according to one or more of claims 1 to 6, characterised in that a fluid, which serves as an additional fuel, is used as carrier fluid (34).

8. Method according to one or more of claims 1 to 7; characterised in that the pyrolytic gas (20) is cooled after separation from the solid pyrolytic residues (21), and at least a portion of the hydrocarbons, which are entrained in vaporous form, is condensed and separated from the pyrolytic gas (20).

9. Method according to claim 8, characterised in that at least a portion of the hydrocarbons (36), which are condensed from the pyrolytic gas (20), is supplied to the gasification reactor (9) as an additional fluid fuel.

10. Method according to one or more of claims 1 to 9, characterised in that combustible waste materials of the group of pulverised, solid waste materials which are suspended in a carrier gas, of pulverised, solid waste materials which are suspended in a carrier fluid, of fluid waste materials and of contaminated combustible gases are supplied to the gasification reactor as an additional fluid fuel (34).

11. Method according to one or more of claims 1 to 10, characterised in that the waste materials (35) are subjected to the low-temperature carbonising process in a pyrolytic furnace (2), which is configured as an externally heated rotary cylindrical furnace.

12. Method according to claim 11, characterised in that the heating of the externally heated rotary cylindrical furnace (2) is effected with the gas (16), which is rich in CO and H₂ and is freed of sulphur compounds, hydrogen halides and aerosols.

## Revendications

1. Procédé de valorisation thermique de déchets par combinaison d'étapes du procédé en soi connues, telles que la pyrolyse, la fragmentation, le calibrage, la gazéification et la purification du gaz, dans lequel les déchets (35) sont soumis, dans un four à pyrolyse (2) isolé de l'air, à des températures allant jusqu'à 800 °C environ, à un processus de lente distillation, dans lequel un gaz de pyrolyse (26) contenant des hydrocarbures à l'état de vapeur et un résidu solide de pyrolyse (24) sont produits, le gaz de pyrolyse (26) est séparé des résidus solides de pyrolyse (21) à des températures supérieures à la température de condensation des hydrocarbures entraînés à l'état de vapeur,
le résidu solide de pyrolyse (24) est soumis à un processus de séparation comprenant des étapes de fragmentation et de calibrage (4, 5, 6) dans lequel un matériau fin (22) broyé et enrichi de composants du type coke et un matériau grossier (23) dépourvu d'impuretés organiques, comprenant essentiellement des composants métalliques, est extrait, le gaz brut de pyrolyse (20) séparé des résidus solides de pyrolyse, le matériau fin broyé précité mis en suspension dans un vecteur fluide et éventuellement un combustible fluide supplémentaire (27) sont amenés à un réacteur de gazéification (9), dans lequel ceux-ci sont transformés dans le courant d'air par voie autothermique en un gaz (31) contenant du CO et du H₂ et en un résidu minéral par formation d'une flamme à l'aide d'un agent de gazéification (O₂) contenant de l'oxygène libre, le rapport entre la quantité d'oxygène libre et la quantité de gaz de pyrolyse dans le matériau fin et éventuellement dans l'hydrocarbure supplémentaire contenu dans le combustible fluide supplémentaire étant calculé de sorte que les températures apparaissant dans le réacteur de gazéification (9) sont supérieures à la température de fusion du résidu minéral et qu'une scorie ignée apparaisse, qui, conjointement avec le gaz riche en CO et en H_{2,} est refroidie et granulée au contact de l'eau (11), avant que le gaz refroidi et la scorie granulée ne quittent le réacteur de gazéification (9).

2. Procédé selon la revendication 1, caractérisé en ce que le gaz (31) refroidi riche en CO et H₂ est débarrassé de composés de soufre, d'hydrohalogénures et d'aérosols.

3. Procédé selon une ou plusieurs des revendications 1 et 2, caractérisé en ce que le matériau fin (21, 22) est broyé jusqu'à une granulation inférieure à 1 mm, de préférence inférieure à 0,5 mm.

4. Procédé selon une ou plusieurs des revendications 1 à 3, caractérisé en ce que le vecteur fluide, dans lequel le matériau fin est mis en suspension et amené au réacteur de gazéification (9), est un gaz porteur.

5. Procédé selon une ou plusieurs des revendications 1 à 4, caractérisé en ce que le gaz porteur (28) mis en oeuvre est un gaz combustible servant de combustible supplémentaire.

6. Procédé selon une ou plusieurs des revendications 1 à 5, caractérisé en ce que le vecteur fluide, dans lequel le matériau fin broyé est mis en suspension, est un liquide porteur.

7. Procédé selon une ou plusieurs des revendications 1 à 6, caractérisé en ce que le liquide porteur (34) mis en oeuvre est un liquide servant de combustible supplémentaire.

8. Procédé selon une ou plusieurs des revendications 1 à 7, caractérisé en ce que le gaz de pyrolyse (20) est refroidi après la séparation des résidus de pyrolyse (21) solides et au moins une partie des hydrocarbures entraînés à l'état de vapeur est condensée et séparée du gaz de pyrolyse (20).

9. Procédé selon la revendication 8, caractérisé en ce qu'au moins une partie des hydrocarbures (36) condensés à partir du gaz de pyrolyse (20) est amenée au réacteur de gazéification (9) comme combustible fluide supplémentaire.

10. Procédé selon une ou plusieurs des revendications 1 à 9, caractérisé en ce que comme combustible fluide supplémentaire (34), des déchets combustibles du groupe comprenant les déchets solides, pulvérisés et mis en suspension dans un gaz porteur, les déchets solides, pulvérisés et mis en suspension dans un liquide porteur, les déchets liquides et les gaz combustibles contaminés sont amenés au réacteur de gazéification.

11. Procédé selon une ou plusieurs revendications 1 à 10, caractérisé en ce que les déchets (35) sont soumis au processus de lente distillation dans un four de pyrolyse (2) consistant en un four rotatif chauffé de l'extérieur.

12. Procédé selon la revendication 11, caractérisé en ce que le four rotatif (2) chauffé de l'extérieur est chauffé au moyen du gaz (16) riche en CO et en H₂ débarrassé des composés de soufre, des hydrohalogénures et des aérosols.
